# FASCICULE DE BREVET EUROPEEN

(11) **EP 3 492 156 B1**
(45) Date de publication et mention de la délivrance du brevet: **26.08.2020**
(21) Numéro de dépôt: 18205739.8
(22) Date de dépôt: 12.11.2018
(51) Int. Cl.: B01D 53/18, B01D 3/00, B01D 3/24

(54) **PLATEAU DISTRIBUTEUR DE GAZ POUR FOND DE COLONNE DE CONTACT GAZ/LIQUIDE COMPRENANT UNE ZONE DE COLLECTE DE LIQUIDE PARTIELLEMENT RECOUVERTE PAR DES CHEMINÉES DE GAZ**
GASVERTEILUNGSPLATTE FÜR DEN BODEN EINER GAS-FLÜSSIGKEITS-AUSTAUSCHKOLONNE, WELCHE EINE FLÜSSIGKEITSSAMMELZONE UMFASST, DIE TEILWEISE VON GASKAMINEN BEDECKT IST
GAS DISTRIBUTION PLATE FOR THE BOTTOM OF A GAS/LIQUID CONTACT COLUMN COMPRISING AN AREA FOR COLLECTING LIQUID PARTIALLY COVERED BY GAS CHIMNEYS

(30) Priorité: 30.11.2017 FR 1761469
(43) Date de publication de la demande: 05.06.2019
(73) Titulaire: IFP Energies nouvelles, 92852 Rueil-Malmaison Cedex (FR)
(72) Inventeur: HAROUN, Yacine, 69002 Lyon (FR); BRAHEM, Rim, 69007 Lyon (FR)
(74) Mandataire: IFP Energies nouvelles

(56) Documents cités:
- WO-A1-2014/070352
- GB-A- 690 795
- US-A1- 2002 079 597
- US-A1- 2014 166 110

## Description

### Domaine de l'invention

La présente invention concerne le domaine des distributeurs de gaz pour colonnes de contact gaz/liquide, et plus particulièrement les colonnes pour les unités de traitement de gaz, de captage du dioxyde de carbone (CO₂), ou de déshydratation d'un gaz.

### Contexte général

Les unités de traitement de gaz et/ou de captage du CO₂ par lavage aux amines et/ou de distillation et/ou de déshydratation comprennent des colonnes d'échange de matière et/ou de chaleur entre un gaz et un liquide. Il peut s'agir par exemple de colonnes d'absorption et de régénération de fluides, liquide ou gazeux. Ces colonnes fonctionnent en écoulement gaz/liquide à contre-courant ou à co-courant.

Dans la présente description, on désigne indifféremment ces colonnes d'échange de matière et/ou de chaleur entre un gaz et un liquide en tant que colonnes d'échange gaz/liquide ou colonnes de contact gaz/liquide.

Les colonnes de contact gaz/liquide utilisées dans ces unités de traitement de gaz et/ou de captage de CO₂ et/ou de distillation et/ou de déshydratation fonctionnent généralement sur le principe d'un échange de matière et/ou de chaleur entre le gaz et le fluide qui circulent dans les colonnes.

Lorsqu'il s'agit de retirer des contaminants présents dans le gaz, comme le CO₂, l'eau, l'hydrogène sulfuré (H₂S), l'oxysulfure de carbone (COS), par des procédés de lavage par un liquide, on utilise généralement des colonnes de contact gaz/liquides verticales, qui lavent un courant de gaz ascendant en circulation à contre-courant d'un courant liquide descendant. Ainsi, les contaminants du gaz sont retenus par le liquide lors de la remontée du gaz dans la colonne avec des vitesses d'absorption variables. Dans le cadre de l'absorption de contaminants dans un gaz, on entend également par colonne de contact verticale les tours de régénération, dans lesquelles les solvants (liquides) chargés en contaminants sont épurés par contact avec un gaz, qui favorise l'extraction des contaminants présents dans la solution chargée en contaminants. Les unités sont généralement composées de deux colonnes de contact gaz/liquide, l'une consacré à l'absorption des contaminants, tels que des composés acides sous forme gazeuse, par le solvant s'écoulant le long de la colonne d'absorption aussi appelée absorbeur, l'autre étant consacrée à la régénération (« régénérateur ») du solvant contenant les contaminants issu de la première colonne de contact gaz/liquide, aussi appelé solvant riche, par exemple par apport de chaleur sous forme de mise en ébullition dudit solvant, de manière à épurer complètement le solvant qui est alors réutilisé dans l'absorbeur. Ce solvant régénéré est aussi appelé solvant pauvre.

Il existe une grande variété de types de colonnes de contact gaz/liquide.

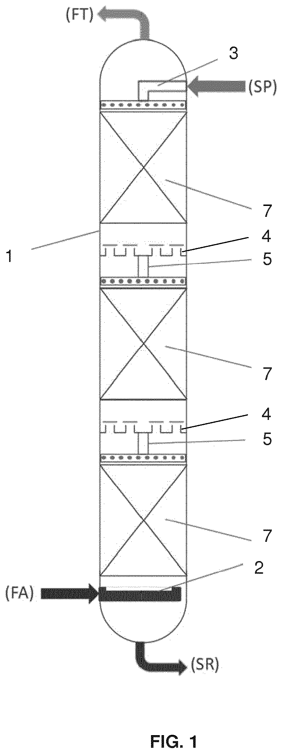

La figure 1 représente une réalisation possible d'une colonne d'échange de matière et/ou de chaleur entre un gaz et un liquide, par exemple dans le cadre de l'absorption de composés acides contenus dans le gaz par le liquide qui est une solution aqueuse d'amine(s). Il s'agit d'une colonne de contact gaz/liquide verticale comportant des internes de contact de type garnissage vrac et/ou garnissage structuré, et mettant en oeuvre plusieurs lits de garnissages avec redistribution intermédiaire du flux de liquide.

Les garnissages dits vrac et les garnissages dits structurés forment les deux grandes familles de garnissages disponibles actuellement. Un garnissage de type vrac est constitué par une multiplicité d'éléments solides singuliers, possiblement identiques et généralement de taille modérée (de l'ordre du centimètre), déposés en vrac au sein des contacteurs, alors qu'un garnissage de type structuré est généralement formé par des tôles d'aciers mises en forme et arrangées de manière particulière.

Tel que représentée à la figure 1, la colonne de contact gaz/liquide 1 contient du garnissage, vrac et/ou structuré, réparti en plusieurs lits de garnissage 7. La colonne de contact 1 reçoit le fluide gazeux FA à traiter, contenant des composés acides à éliminer, en fond de colonne, et le solvant pauvre SP (solution liquide d'amine(s)) en tête de colonne. Le fluide gazeux à traiter FA est généralement introduit en fond de colonne à l'aide d'un distributeur de gaz 2 permettant d'uniformiser au mieux le profil de vitesse du gaz ascendant sur l'ensemble de la section inférieure du lit de garnissage 7 afin d'améliorer les performances de fonctionnement de la colonne. La colonne de contact 1 délivre le fluide gazeux traité FT, épuré d'une partie des composés acides, en tête de colonne, et le solvant riche SR, chargé d'une partie des composés acides contenus dans le fluide gazeux à traiter, en fond de colonne. Le transfert des composés acides du fluide gazeux vers le solvant liquide est opéré via la mise en contact intime de la phase liquide descendante et de la phase vapeur ascendante au sein de la colonne, au niveau des lits de garnissage 7. Les lits de garnissage 7 sont composés d'éléments solides qui présentent une surface de contact élevée, sur laquelle le liquide est réparti de manière uniforme et s'écoule vers le bas, ce qui favorise le contact avec la phase vapeur ascendante, et permet ainsi de transférer efficacement de la matière et/ou de la chaleur entre les deux fluides.

Pour tous les types de garnissage, afin de disposer de toute la surface développée par l'interne de transfert, il convient que chacun des flux évoluant à contre-courant s'écoule de la manière la plus uniforme possible sur l'ensemble de la section de la colonne, et des internes de contact de la colonne. A cet effet, le solvant pauvre SP, en tête de colonne, est injecté de manière uniforme sur la section du lit de garnissage de tête 7, à l'aide d'un distributeur liquide 3, et le gaz à traiter FT est introduit en fond de contacteur à l'aide du distributeur de gaz 2. La colonne 1 comprend également une pluralité de systèmes de collecte et de redistribution liquide (4,5) entre les lits de garnissage 7. La colonne 1 représentée comporte ainsi deux tels systèmes de collecte et de redistribution liquide (4,5), chacun étant placé entre deux lits de garnissage 7 successifs, permettant d'une part de collecter le liquide descendant provenant du lit de garnissage supérieur et de distribuer ledit liquide sur le lit de garnissage inférieur, et d'autre part de distribuer uniformément le gaz provenant du lit de garnissage inférieur liquide sur le lit de garnissage supérieur. Cette configuration est particulièrement bien adaptée lorsqu'une forte hauteur de contact gaz/liquide est requise. Ces systèmes de collecte et de redistribution liquide intermédiaires, ici installés entre deux lits de garnissage 7, peuvent être de différents types, comme par exemple des systèmes comportant un plateau collecteur de liquide 4 comprenant des cheminées pour le passage du gaz, associé à un distributeur 5 comportant une conduite verticale débouchant sur une pluralité d'arroseurs (tubes horizontaux munis d'orifices ou de buses) pour la distribution du liquide collecté sur le plateau 4.

En général, le distributeur de gaz 2 disposé en fond de la colonne collecte également le liquide SR qui peut ensuite être extrait en fond de colonne 1. Le liquide SR est généralement collecté dans une zone de collecte de liquide prévue sur le distributeur de gaz 2, ladite zone étant classiquement reliée au fond de la colonne par des jambes débouchant dans une zone de garde liquide d'où est soutiré le liquide hors de la colonne1.

La présente invention porte en particulier sur un tel dispositif de distribution de gaz et de collecte de liquide, disposé en fond de colonne d'échange de matière et/ou de chaleur entre un gaz et un liquide. Un tel dispositif n'a pas de fonction de redistribution de liquide tel que les systèmes de collecte et de redistribution liquide intermédiaires entre des lits de garnissage illustrés à la figure 1.

Comme évoqué plus haut dans la description de la colonne représentée à la figure 1, une bonne distribution des phases gaz et liquide est importante pour assurer une bonne opérabilité de la colonne ainsi qu'un transfert de matière et/ou de chaleur efficace garantissant le respect des spécifications requises pour les produits (e.g. fluide gazeux traité FT épuré d'une partie des composés acides tels que le CO₂, l'H₂S, le COS).

En particulier, la qualité de la distribution du gaz est d'autant plus importante que le diamètre de la colonne est grand et que le garnissage utilisé pour mettre en contact le gaz et le liquide est capacitif. Par garnissage capacitif, on entend un garnissage ayant une grande capacité. On appelle capacité d'un garnissage, la quantité de gaz maximum pouvant circuler sans engorger la colonne par rapport à un débit liquide donné, c'est-à-dire sans créer d'accumulation de liquide dans une partie du garnissage. La capacité d'un garnissage dépend de nombreux facteurs (angle des canaux, formes des éléments, etc.), elle est généralement inversement proportionnelle à sa surface spécifique (également appelée aire géométrique) qui est la surface de contact par unité de volume (exprimée en m²/m³). En effet, l'utilisation d'un garnissage capacitif permet de retarder le phénomène d'engorgement de la colonne, et permet également de réduire la perte de charge linéique dans le garnissage. Par perte de charge linéique, on entend la perte de charge totale du garnissage ramenée à sa hauteur.

Ainsi, plus particulièrement pour les colonnes d'échange de matière et/ou de chaleur entre un gaz et un liquide de large diamètre, typiquement ayant un diamètre supérieur ou égal à 1 mètre, le système de distribution du gaz en fond de colonne s'avère important.

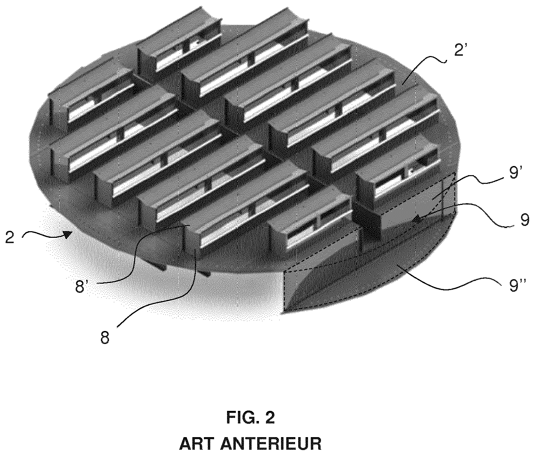

Parmi les systèmes de distribution du gaz en fond de colonne existants, les plateaux à cheminées (« chimney trays » en anglais) sont largement employés. Un tel type de distributeur de gaz est illustré à la figure 2. Un exemple d'un tel distributeur est par exemple commercialisé par Sulzer Chemtech et proposé dans le document commercial « Internais for packed columns » (Sulzer Chemtech, Commercial Brochure 22.51.06.40 - V.13, page 16). Dans ce type de distributeur de gaz, un plateau 2 est muni de plusieurs cheminées 8 pour le passage du gaz à travers le plateau 2. Selon un mode de fonctionnement contre-courant de la colonne, chaque cheminée 8 permet le passage du gaz de la partie basse de la colonne vers la partie haute de la colonne. Les cheminées 8 sont en saillies d'une face du plateau 2, plus précisément la face supérieure du plateau 2 orientée vers le haut de la colonne, et sont disposées orthogonalement au plan formé par le plateau 2. Chaque cheminée 8 est formée de plusieurs parois qui délimitent un volume interne ouvert de part et d'autre du plateau 2. Pour chaque cheminée 8, l'ouverture d'échappement du gaz située sur la face supérieure du plateau 2 est surmontée par un chapeau 8' permettant d'éviter que le liquide ne passe dans les cheminées 8 tout en laissant passer le gaz par un espace laissé entre le chapeau 8' et la cheminée 8. Le plateau 2 comporte également une zone de collecte 9 du liquide pour la récupération du liquide descendant dans la colonne et tombant sur le plateau 2 entre les cheminées 8. Cette zone de collecte 9 est une cavité du plateau 2 située à sa périphérie, délimitée d'un côté par un déversoir 9', qui correspond à une portion verticale du plateau, et d'un autre côté par la paroi de la virole de la colonne à laquelle vient se fixer le plateau 2. Cette zone de collecte 9 est généralement reliée à une zone inférieure de la colonne où se forme une garde liquide et d'où le liquide peut être extrait de la colonne (non représenté).

Le plateau 2 a une forme générale circulaire selon une vue du dessus, et comporte une première portion plane 2' supportant les cheminées 8, ayant une forme de cercle tronqué selon une vue du dessus, une deuxième portion plane 9" sensiblement parallèle à la première portion plane, située à un niveau inférieur à celui de la première portion du plateau, et reliée à la première portion par le déversoir 9', qui est une troisième portion plane orthogonale du plateau. La zone de collecte 9 est donc le volume formé en partie par le déversoir 9 et la deuxième portion plane 9" du plateau, l'autre partie étant la paroi de la virole de la colonne (non représentée).

Sur le plateau 2 représenté, 12 cheminées en forme de parallélépipède rectangulaire, allongées selon un axe parallèle au plan formé par le déversoir 9' sont ainsi disposées de manière alignées deux par deux de part et d'autre d'un conduit central divisant la première portion du plateau en deux parties égales, ledit conduit débouchant dans la zone de collecte 9 délimitée par le déversoir 9' et la deuxième portion plane inférieure 9" du plateau.

Dans d'autres distributeurs de gaz de type plateaux à cheminées selon l'art antérieur, les cheminées de passage du gaz peuvent avoir d'autres formes et une autre disposition que celles du plateau distributeur de gaz illustré à la figure 2, par exemple une forme cylindrique. Il en va de même pour les chapeaux recouvrant les cheminées pouvant avoir d'autres formes, ou pour la zone de collecte du liquide qui peut être disposée sur toute la périphérie du plateau, ou être partagée en deux zones à la périphérie du plateau et diamétralement opposées. Le document WO 2014/070352 A1 divulgue également une colonne d'échange ayant un plateau distributeur comportant des cheminées.

Toutefois, les distributeurs de gaz de type plateaux à cheminées selon l'art antérieur ne sont pas toujours satisfaisants et peuvent présenter des vitesses de gaz non parfaitement homogènes, notamment sur les bords de tels plateaux, et ceci est d'autant plus accentué que le diamètre de la colonne est grand.

En outre, il est toujours recherché à réduire la hauteur d'une colonne, notamment contrainte par la taille des internes qu'elle contient, et dont fait partie le distributeur de gaz placé en fond de colonne.

### Objectifs et résumé de l'invention

La présente invention vise ainsi à fournir un distributeur de gaz de type plateau à cheminée amélioré, notamment pour être utilisé dans le cas de colonnes de large diamètre (typiquement de diamètre au moins égal à 1 m.), permettant notamment une meilleure homogénéisation de la vitesse de gaz en aval du distributeur (en aval étant défini par rapport à la direction du courant de gaz ascendant dans la colonne), tout en minimisant l'encombrement, c'est-à-dire la hauteur du distributeur de gaz, et donc de la colonne qui l'intègre.

Ainsi, pour atteindre au moins l'un des objectifs susvisés, parmi d'autres, la présente invention propose, selon un premier aspect, une colonne suivant la revendication 1.

Selon un mode de réalisation, la longueur de l'élément de distribution du gaz d'au moins une desdites cheminées est plus grande que la largeur de la portion de la face supérieure du plateau supportant les cheminées définie comme étant la distance séparant les deux déversoirs diamétralement opposés.

Selon un mode de réalisation, chaque cheminée comporte en outre un caisson de surélévation sur lequel repose l'élément de distribution du gaz, l'élément de distribution du gaz étant ainsi surélevé par rapport à ladite portion de la face supérieure du plateau de préférence d'une hauteur (h₂) comprise entre 0 et 0,20 m.

De préférence, la longueur du caisson de surélévation de chaque cheminée est inférieure ou égale à la largeur de la portion de la face supérieure du plateau supportant les cheminées définie comme étant la distance séparant les deux déversoirs, et est inférieure ou égale à la longueur de l'élément de distribution du gaz.

Selon un mode de réalisation, l'élément de distribution du gaz des cheminées est surmonté par un chapeau pour empêcher le passage du liquide au travers des cheminées, le chapeau étant surélevé par rapport au sommet de l'élément de distribution du gaz de manière à laisser un espace pour le passage du gaz.

Selon un mode de réalisation, au moins une des cheminées, et de préférence la totalité des cheminées, comporte un élément dispersif par rapport au gaz disposé à l'intérieur de l'élément de distribution du gaz de la cheminée.

L'élément dispersif peut comprendre une plaque perforée comportant des orifices circulaires ou des fentes pour le passage du gaz.

L'élément dispersif peut comprendre un garnissage vrac ou structuré, de préférence réparti uniformément à l'intérieur de l'élément de distribution du gaz de la cheminée dans le sens de sa hauteur et selon un plan orthogonal à sa hauteur.

Les deux déversoirs sont situés à la périphérie du plateau dans deux zones diamétralement opposées du plateau, et sont orthogonaux à la portion de la face supérieure du plateau supportant les cheminées.

La zone de collecte comporte deux volumes distincts, chaque volume étant en partie délimité par l'un des deux déversoirs et une portion basale du plateau.

Selon un mode de réalisation, le plateau comporte entre 2 et 100 cheminées.

Selon un deuxième aspect, la présente invention porte sur l'utilisation d'une colonne selon l'invention pour un procédé de traitement de gaz, de captage du CO₂, de déshydratation d'un gaz ou de distillation.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1, déjà décrite, est un schéma illustrant un cas particulier d'une colonne de contact gaz/liquide pour l'absorption de composés acides contenus dans un gaz par une solution aqueuse d'amine, dans le cadre d'un traitement de gaz ou d'une capture de CO₂, équipée d'un plateau distributeur selon l'art antérieur ou selon l'invention.
La figure 2, déjà décrite, illustre un distributeur de gaz de type plateau à cheminées selon l'art antérieur apte à être placé en fond d'une colonne de contact gaz/liquide.
La figure 3 est une vue en perspective illustrant un plateau distributeur de gaz selon un mode de réalisation de l'invention.
La figure 4 est la même vue en perspective que la figure 3 mais représentée en transparence pour laisser apparaître la structure interne des cheminées du plateau distributeur de gaz selon un mode de réalisation de l'invention.
La figure 5 est une vue en coupe (selon une section A-A' représentée à la figure 6) du plateau distributeur de gaz illustré à la figure 3.
La figure 6 est une vue du dessus du plateau distributeur de gaz illustré à la figure 3.

Sur les figures, les mêmes références désignent des éléments identiques ou analogues.

### Description de l'invention

Dans l'invention, l'élément de distribution du gaz d'au moins une des cheminées recouvre en partie la zone de collecte du liquide.

Grâce à ce recouvrement, le plateau distributeur de gaz selon l'invention présente une surface ouverte au passage du gaz importante permettant d'assurer une meilleure qualité de distribution du gaz. Il se distingue ainsi des distributeurs de gaz connus dans lesquels les cheminées sont cantonnées à une zone de distribution du gaz sans recouvrement avec la zone de collecte du liquide.

Le plateau distributeur selon l'invention est également compact en hauteur grâce à ce recouvrement. En effet, un tel recouvrement permet une meilleure flexibilité concernant le dimensionnement de la zone de collecte, et notamment une conception du plateau plus compacte en hauteur. Pour un volume donné de la zone de collecte de liquide, la hauteur de la zone de collecte du liquide du plateau distributeur selon l'invention peut être réduite car la surface de la zone de collecte peut être augmentée, ceci du fait que la surface d'ouverture au passage du gaz recouvre en partie la surface de la zone de collecte du liquide.

Le plateau distributeur de gaz selon l'invention est mis en oeuvre au fond d'une colonne d'échange de chaleur et/ou de matière entre un gaz et un liquide fonctionnant selon un écoulement à contre-courant, le gaz montant depuis le fond de la colonne à travers les cheminées du plateau distributeur de gaz pour le passage exclusif du gaz, et le liquide descendant étant collecté dans la zone de collecte du liquide, pouvant alors être ensuite évacué hors de ladite colonne.

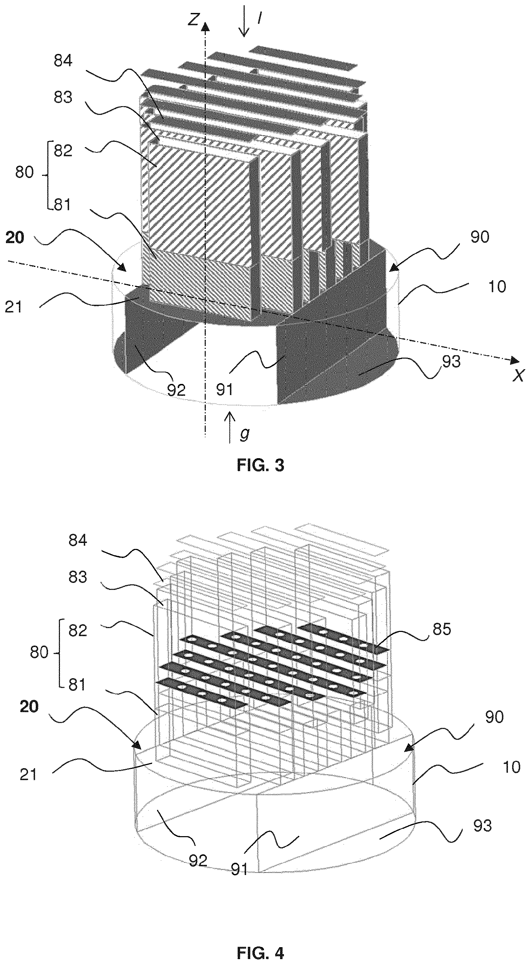

Les figures 3 à 6 illustrent un exemple non limitatif de plateau distributeur selon l'invention.

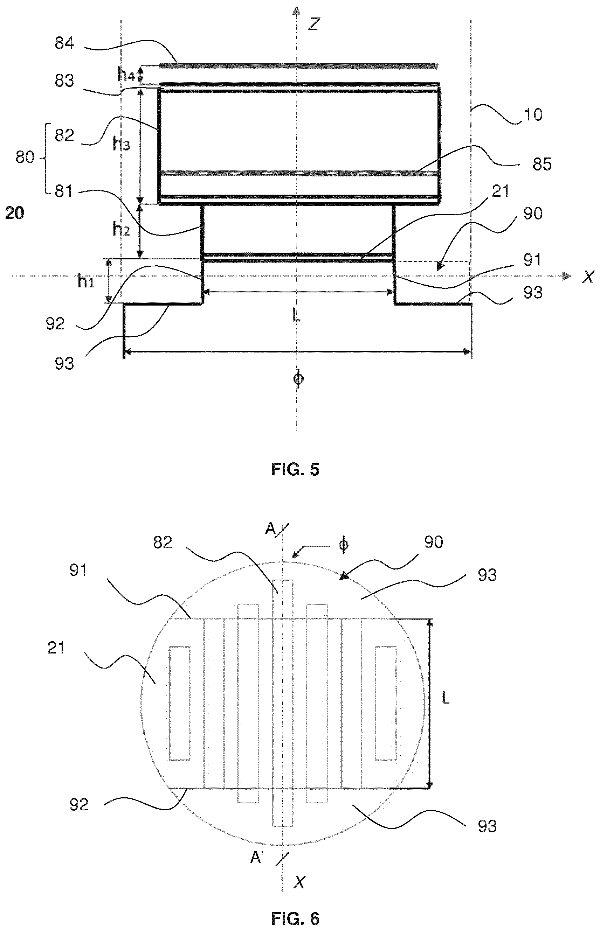

Le plateau distributeur de gaz 20 est représenté selon une vue perspective à la figure 3, dans sa position d'utilisation au sein d'une colonne de contact gaz/liquide dont une portion est représentée dans la figure 3 sous la forme d'une section cylindrique 10. Classiquement, le plateau distributeur de gaz 20 s'inscrit dans un cylindre de diamètre φ, qui est sensiblement égal à celui de la colonne de contact gaz/liquide. Le diamètre φ du cylindre dans lequel s'inscrit le plateau distributeur de gaz 20 est référencé dans les figures 5 et 6. Le plateau selon l'invention est bien adapté à être utilisé dans des colonnes de diamètre important, typiquement supérieur ou égal à 1 mètre, de préférence supérieur ou égal à 3 m, et pouvant atteindre 7 à 8 m. Le plateau distributeur de gaz 20 selon l'invention est ainsi destiné à être fixé au fond de la colonne 10, dans une position horizontale, en amont de tout contacteur gaz/liquide, e.g un lit de garnissage, pour la distribution du gaz provenant du fond de la colonne sur l'ensemble de la section inférieure du contacteur gaz/liquide. Pour une meilleure compréhension du fonctionnement d'un tel plateau distributeur 20, des flèches illustrent le sens de l'écoulement du gaz ascendant g et du liquide descendant *l*.

Le plateau distributeur de gaz 20 comporte une pluralité de cheminées 80, par exemple 7 cheminées 80 comme représenté dans les figures, pour le passage exclusif du gaz g à travers le plateau 20. Par pluralité de cheminées, on entend au moins deux cheminées. Le nombre de cheminées est variable et dépend de la conception du plateau, en particulier de paramètres tels que la taille du plateau, le taux d'ouverture souhaité, le volume de la zone de collecte, etc.. A titre indicatif seulement, sans limitation aucune, le plateau distributeur de gaz 20 peut comporter entre 2 et 100 cheminées 80. Les cheminées 80 sont en saillies sur une portion 21 de la face supérieure du plateau.

On appelle face supérieure du plateau distributeur de gaz 20 la face du plateau distributeur qui est orientée vers le haut de la colonne d'échange. Par opposition, la face inférieure du plateau distributeur 20 est celle orientée vers le bas de la colonne par lequel le gaz à distribuer arrive.

Les cheminées 80 sont sensiblement parallélépipédiques, en forme de parallélépipède rectangle comme représenté, et sont disposées parallèlement entre elles. De préférence un espacement régulier sépare les cheminées 80. Une telle forme des cheminées permet une large ouverture au passage du gaz, notamment en comparaison de cheminées cylindriques connues, ce qui permet de limiter les pertes de charge.

Le plateau distributeur comporte également une zone de collecte du liquide 90 comportant deux déversoirs diamétralement opposés (91, 92) pour la collecte du liquide *l* sur le plateau 20.

Par déversoir, on entend une portion du plateau qui est inclinée, sensiblement orthogonale, par rapport à la portion 21 de la face supérieure du plateau 20 supportant les cheminées 80, qui est positionnée en périphérie du plateau et qui permet au liquide *l* de se déverser vers la base 93 du plateau située à une cote moins élevée que celle de la portion 21 de la face supérieure du plateau 20. Les cotes sont évaluées lorsque le plateau 20 est en position non inclinée (i.e. portion 21 du plateau supportant les cheminées dans un plan sensiblement horizontal) et disposé de manière à ce qu'un axe vertical Z traverse les cheminées 80 disposées sur le plateau, correspondant à la position d'utilisation du plateau dans la colonne d'échange gaz/liquide. Cela est transposable à toutes les cotes mentionnées dans la présente description.

Selon l'invention, les déversoirs (91, 92) sont situés à la périphérie du plateau distributeur de gaz dans deux zones diamétralement opposées, et sont orthogonaux à la portion 21 supportant les cheminées 80. Ce sont par exemple des plaques planes reliant la portion 21 support des cheminées 80 et la base 93 du plateau distributeur 20, orthogonales aux plans formés par la portion 21 et la base 93 du plateau 20.

La zone de collecte 90 est équivalente à un volume pouvant être calculé à partir du diamètre φ du cylindre dans lequel s'inscrit le plateau distributeur de gaz 20, de la hauteur h₁ de la zone de collecte définie entre la base 93 du plateau et la portion 21 support des cheminées, et de la largeur L de la portion 21 du plateau.

La zone de collecte 90 est constituée par, deux volumes distincts, chaque volume étant en partie délimité par l'un des deux déversoirs et une portion basale 93 du plateau. Lorsque le plateau est positionné dans la colonne de contact gaz/liquide, chacun des deux volumes est alors également délimité par la paroi interne de la colonne à laquelle le plateau est fixé. Les deux volumes sont ouverts vers le haut du plateau, c'est-à-dire du côté des cheminées 80, de manière à recueillir le liquide *l*, et fermés vers le bas du plateau, c'est-à-dire au niveau de la base 93 du plateau. Des moyens d'évacuation du liquide collecté, tels que des ouvertures dans le plateau et des conduits, non représentés, peuvent être prévus dans la zone de collecte 90, en particulier dans les deux volumes de la zone de collecte. Ainsi, le liquide peut être évacué depuis la zone de collecte vers le fond de la colonne dans une zone de la colonne où se forme une garde liquide et d'où il peut ensuite être extrait hors de la colonne.

Selon le mode de réalisation illustré dans les figures 3 à 6, chaque cheminée 80 comporte un élément de distribution du gaz 82 et un caisson de surélévation 81 sur lequel repose l'élément de distribution du gaz 82. L'élément de distribution du gaz 82 est ainsi surélevé par rapport à la portion 21 de la face supérieure du plateau distributeur de gaz 20, d'une hauteur h₂, qui est la hauteur du caisson de surélévation 81, tel que bien représenté à la figure 5. Par élément surélevé, on entend que la base dudit élément est à un niveau (cote) plus élevé par rapport à une surface de référence. Par exemple un élément de distribution du gaz 82 surélevé d'une hauteur h₂ par rapport à la portion 21 signifie que la base dudit élément de distribution 82 se trouve à une hauteur h₂ de la surface 21. L'élément de distribution du gaz 82 et le caisson de surélévation 81 ont la même forme, qui est celle de la cheminée, c'est à dire une forme de parallélépipède, de préférence rectangle. La présence de tels caissons de surélévation peut notamment faciliter la fabrication des plateaux selon l'invention, en laissant plus de souplesse pour la fixation des éléments de distribution du gaz à la surface du plateau. Selon un autre mode de réalisation non illustré, les cheminées 80 ne comportent pas de caisson de surélévation, et l'élément de distribution de gaz 82 forme le corps principal de la cheminée, reposant directement sur la portion 21 de la face supérieure du plateau 20.

Selon l'invention, l'élément de distribution de gaz 82 d'au moins une des cheminées 82 recouvre en partie la zone de collecte du liquide 90. Plus précisément, l'élément de distribution de gaz 82 recouvre en partie la zone de collecte du liquide 90, c'est-à-dire la zone qui récupère le liquide descendant dans la colonne et tombant sur la portion 21 du plateau 20 entre les cheminées 80, cette zone de collecte étant formée par les deux volumes distincts formés entre la portion basale du plateau 93 et les déversoirs (91, 92). L'élément de distribution de gaz 82 déborde ainsi de la portion 21 du plateau sur ladite zone de collecte (90).

L'élément de distribution du gaz 82 surélevé est situé à des cotes plus élevées que celles du caisson de surélévation 81 de la cheminée 80. Il constitue ainsi une partie supérieure de la cheminée et le caisson de surélévation 81 une partie inférieure de la cheminée. Comme illustré en particulier à la figure 5, le caisson de surélévation 81 de la cheminée 80 a une hauteur h₂, de préférence plus petite que la hauteur h₃ de l'élément de distribution du gaz 82 de la cheminée. A titre d'exemple non limitatif, la hauteur h₂ du caisson de surélévation 81 de la cheminée peut être comprise entre 0 et 0,20 m, de préférence entre 0,005 m et 0,20 m, et plus préférentiellement entre 0,005 m et 0,05 m. De même, à titre d'exemple non limitatif, la hauteur h₃ de l'élément de distribution du gaz 82 peut être comprise entre 0,15 m et 1,00 m, et de préférence entre 0,2 m et 0,6 m.

Le caisson de surélévation 81 de la cheminée comporte à sa base l'ouverture d'arrivée pour le gaz *g* provenant de la partie inférieure du plateau distributeur 20, et l'élément de distribution du gaz 82 de la cheminée comporte à son sommet l'ouverture d'échappement du gaz ayant traversé la cheminée 80. Dans le mode de réalisation où les cheminées ne comportent pas de caissons de surélévation, l'élément de distribution du gaz 82 comporte à sa base l'ouverture d'arrivée pour le gaz *g* provenant de la partie inférieure du plateau distributeur 20.

Selon l'invention, étant donné que l'élément de distribution du gaz 82 d'au moins une des cheminées 80, par exemple des trois cheminées centrales tel que représenté, recouvre en partie la zone de collecte du liquide 90, le plateau distributeur présente une surface ouverte au passage du gaz améliorée par rapport à des plateaux distributeurs de gaz selon l'art antérieur, notamment par rapport à des plateaux distributeurs de gaz selon l'art antérieur à cheminées en forme de parallélogramme rectangle sans recouvrement de la zone de collecte. Une telle surface de passage au gaz améliorée permet une meilleure homogénéisation de la vitesse de gaz en aval du plateau distributeur de gaz.

La surface ouverte au passage du gaz peut se quantifier par le taux d'ouverture au passage du gaz, défini dans la présente description comme le rapport entre la surface totale formée par les ouvertures d'échappement au gaz au sommet des cheminées 80 (i.e. au sommet de l'élément de distribution du gaz 82 des cheminées 80), et la surface totale du plateau distributeur de gaz 20, ladite surface totale du plateau étant classiquement celle d'un cercle pour un plateau s'inscrivant dans un cylindre, dont le diamètre φ est celui de la colonne de contact gaz/liquide.

Plus de détails sont donnés ci-dessous s'agissant du recouvrement d'une partie de la zone de collecte 90 par l'élément de distribution du gaz 82 d'au moins un cheminée 80 du plateau distributeur de gaz.

Les cheminées 80 en forme de parallélépipède, de préférence rectangle, s'étendent avantageusement entre les déversoirs (91, 92). Leur allongement se fait ainsi selon un axe orthogonal X aux plans formés par les déversoirs (91, 92).

Avantageusement, la longueur de l'élément de distribution du gaz 82 d'au moins une des cheminées 80 est plus grande que la largeur L de la portion 21 de la face supérieure du plateau 20 supportant les cheminées 80. Cette largeur L de la portion 21 est définie par la distance séparant les deux déversoirs (91, 92), comme bien visible aux figures 5 et 6.

Avantageusement, la longueur du caisson de surélévation 81 de chaque cheminée 80 est inférieure ou égale à ladite largeur L de la portion 21 du plateau, et est inférieure ou égale à la longueur de l'élément de distribution du gaz 82.

C'est ainsi que dans le plateau représenté aux figures 3 à 6, les trois cheminées centrales ont leur élément de distribution du gaz 82 plus long que leur caisson de surélévation 81, et débordent ainsi sur la zone de collecte du liquide 90 (surface de recouvrement grisée sur la figure 6). De part et d'autre des trois cheminées centrales se trouvent deux cheminées dont les caissons de surélévation 81 et les éléments de distribution du gaz 82 ont sensiblement la même longueur, ladite longueur étant inférieure ou égale à la largeur L de la portion 21 du plateau.

Préférentiellement, l'élément de distribution du gaz 82 des cheminées 80 est surmonté par un chapeau 84 pour empêcher le passage du liquide *l* au travers des cheminées. Le chapeau 84 est surélevé par rapport au sommet de l'élément de distribution du gaz 82 d'une hauteur h₄ donnée, comme visible à la figure 5, de manière à laisser un espace pour le passage du gaz *g*. Sans se limiter à cet exemple, le chapeau peut être une plaque de même forme que celle de la cheminée, par exemple un rectangle, tel que représenté dans les figures 3 à 5. Le chapeau peut alternativement avoir une forme de chapeau chinois, une forme de demi-cylindre, etc.

De préférence, l'intérieur de l'élément de distribution du gaz 82 d'au moins une des cheminées 80 est pourvu d'un élément dispersif par rapport au gaz, c'est-à-dire un élément qui assure une dispersion du gaz lors de son passage dans l'élément de distribution du gaz de la cheminée, générant ainsi une meilleure répartition (au sens de l'homogénéisation) du gaz dans cette partie de la cheminée, et donc à la sortie de la cheminée. Une telle ré-homogénéisation du gaz est particulièrement avantageuse lorsque la longueur de l'élément de distribution du gaz 82 de la cheminée est supérieure à celle du caisson de surélévation 81 de la cheminée. De préférence, toutes les cheminées du plateau distributeur sont pourvues d'un tel élément dispersif, de manière à favoriser une homogénéisation du flux de gaz en aval du plateau distributeur.

Cet élément dispersif peut être positionné à la base de l'élément de distribution du gaz 82 de la cheminée, par exemple dans le premier tiers de l'élément de distribution du gaz 82 de la cheminée. En étant ainsi plus proche de la base de l'élément de distribution du gaz 82 que de son sommet, l'élément dispersif permet de redistribuer le gaz sur la totalité de surface de la cheminée tout en laissant une hauteur suffisante pour la stabilisation gaz ayant traversé l'élément de dispersion.

Avantageusement, l'élément dispersif comprend une plaque perforée comportant des orifices circulaires ou des fentes. L'exemple de plateau distributeur selon l'invention représenté dans les figures 3 à 6 comporte de telles plaques perforées 85 munies d'orifices circulaires, à la base des éléments de distribution du gaz 82 de chaque cheminée 80, tel que cela est bien visible à la figure 4, qui est une vue identique à celle de la figure 3 mais représentée en transparence. L'élément dispersif peut également être un garnissage vrac ou de type structuré, préférentiellement de type structuré notamment car un garnissage structuré permet une densité uniforme du milieu dispersif. Il peut aussi être une combinaison d'un ou plusieurs de ces éléments.

On appelle garnissage vrac, des empilements anarchiques, aléatoires, d'éléments unitaires possédant des formes particulières, par exemple des anneaux, des spirales, etc. Ils sont généralement utilisés pour effectuer des échanges de chaleur et/ou de matière, qui se réalisent au sein de ces éléments unitaires. Ces éléments unitaires peuvent être en métal, en céramique, en plastique ou en matériaux analogues. Les demandes de brevet EP 1478457 et WO 2008/067031 décrivent deux exemples d'élément unitaire de garnissage vrac. Le garnissage vrac offre des qualités intéressantes en termes d'efficacité de transfert, faible perte de charge et simplicité d'installation. L'aire géométrique du garnissage vrac peut être comprise entre 70 et 250 m²/m³. On appelle garnissage structuré, un empilement de plaques ou de feuilles pliées, ondulées (« corrugated » en anglais, c'est-à-dire sensiblement ondulé avec des angles droits), et arrangées de manière organisée sous forme de grand blocs comme décrit notamment dans les demandes de brevet FR 2913353 (US 2010/0213625), US 3,679,537 et US 4,296,050. Ils sont généralement utilisés pour réaliser des échanges de chaleur et/ou de matière qui s'effectuent sur ces plaques. Les garnissages structurés ont l'avantage d'offrir une grande aire géométrique pour un diamètre représentatif donné. L'aire géométrique du garnissage structuré peut être comprise entre 100 et 500 m²/m³.

Lorsqu'il s'agit d'un garnissage vrac ou de type structuré, l'élément dispersif peut être réparti à l'intérieur de l'élément de distribution du gaz 82 de la ou des cheminées pour le passage exclusif du gaz de manière uniforme dans le sens de la hauteur de la cheminée (selon l'axe Z) et de manière uniforme selon un plan orthogonal à la hauteur de la cheminée (selon l'axe X). De cette manière, la dispersion du gaz traversant la ou les cheminées est la plus homogène possible, ce qui permet un flux de gaz en sortie de la ou des cheminées constant sur une section correspondant à la section de la ou des cheminées.

Toujours lorsqu'il s'agit d'un garnissage vrac ou de type structuré, l'élément dispersif peut être uniformément réparti dans l'élément de distribution du gaz 82 de la cheminée sur une épaisseur au moins égale à 5 cm dans le sens de la hauteur de la cheminée. De cette manière, les particules de gaz traversant de telles épaisseurs de matériau dispersif sont suffisamment dispersées pour assurer un flux de gaz homogène en sortie des cheminées. Il peut par également être uniformément réparti sur toute la hauteur de l'élément de distribution du gaz 82 de la ou des cheminées pour le passage exclusif du gaz.

Encore lorsqu'il s'agit d'un garnissage vrac ou de type structuré, l'élément dispersif est de préférence plus capacitif que le garnissage utilisé en tant que contacteur gaz/liquide positionné plus haut dans la colonne d'échange de matière et/ou de chaleur entre un gaz et un liquide.

L'invention concerne également une colonne d'échange de matière et/ou de chaleur entre un gaz et un liquide, dans laquelle les deux fluides sont mis en contact au moyen d'au moins un contacteur gaz/liquide. Un tel contacteur gaz/liquide est de préférence un lit de garnissage structuré ou vrac, tels que définis précédemment. Ce peut être également tout autre moyen de mise en contact gaz/liquide permettant un échange de matière et/ou de chaleur, tel que des plateaux.

Le gaz et le liquide s'écoulent dans la colonne à contre-courant, en particulier avec un flux de gaz ascendant et un flux de liquide descendant.

La colonne selon l'invention peut être une colonne telle que décrite en relation avec la figure 1, par exemple adaptée à une procédé d'absorption de composés acides tels que le CO₂, l'H₂S, le COS, le disulfure de carbone (CS₂), le dioxyde de soufre (SO₂) et les mercaptans (RSH) tel que le méthylmercaptan (CH₃SH), l'éthylmercaptan (CH₃CH₂SH) et le propylmercaptan (CH₃CH₂CH₂SH), contenus dans un gaz à traiter, par le liquide qui est une solution aqueuse d'amine(s). La colonne peut ainsi comporter, sans reprendre exhaustivement la description qui a déjà été faite plus haut d'une telle colonne, au moins une entrée d'un liquide (appelé « solvant pauvre ») disposée au sommet de la colonne, au moins une entrée d'un gaz à traiter au fond de la colonne, au moins une sortie pour le gaz traité au sommet de la colonne, et au moins une sortie du liquide enrichi en contaminants contenus initialement dans le gaz à traiter en fond de colonne (appelé « solvant riche »). La colonne comporte avantageusement au moins un contacteur gaz/liquide 7, de préférence un lit de garnissage structuré, pour mettre en contact le gaz à traiter avec le solvant pauvre.

La colonne selon l'invention se caractérise par le fait qu'elle comporte un unique plateau distributeur de gaz 20 tel que décrit précédemment, disposé au fond de la colonne en amont de tout contacteur gaz/liquide pour distribuer le gaz à la base dudit contacteur gaz/liquide, de manière homogène.

Selon un mode de réalisation de la présente invention, la colonne comporte plusieurs sections, chaque section comprenant un contacteur gaz/liquide, de préférence un lit de garnissage structuré ou vrac.

La colonne selon l'invention peut être utilisée dans un procédé de traitement de gaz, en particulier un procédé d'élimination de composés acides contenus dans un gaz au moyen d'une solution liquide à base d'amine(s), par exemple pour traiter du gaz naturel, ou dans un procédé pour le captage du CO₂ qui est typiquement un procédé de traitement du gaz au moyen d'une solution liquide à base d'amine(s), par exemple pour traiter des fumées de combustion. La colonne selon l'invention peut également être avantageusement utilisée dans un procédé de déshydratation d'un gaz visant à éliminer l'eau (« sécher ») contenue dans un effluent gazeux, tel que le gaz naturel, par une mise en contact du gaz avec solvant liquide, tel que le glycol, ou encore être utilisée dans un procédé de distillation de liquides. D'autres types de solvants peuvent être utilisés dans ces procédés où une colonne selon l'invention peut être utilisée.

### Exemple

L'exemple suivant illustre certains avantages de la présente invention, en comparant les résultats obtenus en utilisant un plateau distributeur de gaz selon l'invention et un plateau distributeur du gaz selon l'art antérieur, dans le cadre d'un procédé d'absorption réactive des composés acides par lavage aux amines de type captage du CO₂, pour atteindre une spécification cible de teneur en CO₂ en sortie de l'absorbeur. La colonne et le procédé de captage du CO₂ présentent les principales caractéristiques suivantes :
- Diamètre de la colonne : 1 m.
- Solvant utilisé : solution aqueuse comportant 40 % poids de méthyldiéthanolamine (MDEA).
- Nombre total de plateaux dans la colonne : 5 (inclus le plateau distributeur de gaz en fond de colonne, et les plateaux collecteurs/distributeurs de liquide).
- Hauteur des plateaux collecteurs/distributeurs : 1 m (n'inclus pas le plateau distributeur de gaz en fond de colonne)
- Nombre de lits de garnissages structurés : 4.
- Aire effective du garnissage structuré des lits : 250 m²/m³.
- Hauteur par lit de garnissage : 4 m.
- Débit de solvant : QL = 46 m³/m^{2/}h.
- Débit de gaz : Fs = 2 (m/s) (kg/m³)^{0.5}.
- Pression : 40 bars.
- Température : 40°C.

Le plateau distributeur selon l'invention exemplifié est conforme à celui représenté aux figures 3 à 6 et comporte 7 cheminées. Le diamètre du plateau est de 1 m. D'autres caractéristiques géométriques du plateau sont résumées plus bas dans le tableau 1.

Le plateau distributeur de gaz selon l'art antérieur testé diffère du présent exemple de plateau distributeur de gaz selon l'invention en ce que les cheminées en forme de parallélépipède rectangles sont allongées selon un axe parallèle aux déversoirs, sans recouvrement possible de la zone de collecte par les cheminées. Il comporte 7 cheminées. D'autres différences portent sur les dimensions de la zone de collecte (et notamment la hauteur h₁ des déversoirs). Le plateau selon l'art antérieur et le plateau selon l'invention ont des dimensions de la zone de collecte différentes mais un volume de la zone de collecte identique (0,0908 m³). D'autres caractéristiques géométriques du plateau selon l'invention sont résumées plus bas dans le tableau 1.

Dans cet exemple, le plateau selon l'invention est conçu de manière à obtenir au moins les mêmes performances que celles obtenues avec le plateau selon l'art antérieur exemplifié.

Le tableau 1 ci-dessous compare certains paramètres des plateaux distributeurs de gaz testés.

**Tableau 1**

| | Plateau distributeur de gaz selon l'art antérieur | Plateau distributeur de gaz selon l'invention |
|---|---|---|
| φ (m) | 1 | 1 |
| h₁ (m) | 0,56 | 0,28 |
| h₂ (m) | 0 | 0 |
| h₃ (m) | 0,40 | 0,40 |
| h₄ (m) | 0,05 | 0,05 |
| L (m) | 0,68 | 0,48 |
| S (%) | 30 | 41 |
| V/V_{SG} (m/s) | 2,62 | 1,92 |
| H (m) | 0,5 | 0,37 |
| Hₜₒₜₐₗₑ (m) | 1,51 | 1,10 |

Dans le tableau 1 :
- *φ* est le diamètre du cylindre dans lequel s'inscrit le plateau, considéré comme étant le diamètre du plateau.
- *h₁* est la hauteur de la zone de collecte, et plus précisément des déversoirs.
- *h₂* est la hauteur du caisson de surélévation de la cheminée.
- *h₃ est* la hauteur de l'élément de distribution du gaz de la cheminée.
- *h₄* est la hauteur de l'espace laissé entre le sommet de l'élément de distribution du gaz de la cheminée et le chapeau surmontant la cheminée.
- *L* est la largeur de la portion du plateau supportant les cheminées.
- *S* est le taux d'ouverture au passage du gaz, qui est le rapport entre la surface totale développée par les cheminées (surface totale formée par les ouvertures d'échappement au gaz au sommet des cheminées, i.e. au sommet des éléments de distribution du gaz des cheminées), et la surface débitante de la colonne (surface totale du plateau distributeur de gaz correspondant à celle d'un cercle ayant comme diamètre celui de la colonne).
- *V*/*V_{SG}* est le rapport entre la vitesse débitante du gaz dans les cheminées *V* (vitesse du gaz à l'intérieur des cheminées) et la vitesse superficielle du gaz dans la colonne *V_{SG}*. Une valeur proche de 1 traduit une bonne qualité de distribution du gaz. La vitesse superficielle du gaz dans la colonne est la vitesse superficielle du gaz en fût vide, entendue comme étant le rapport entre le débit volumique du gaz aux conditions passant dans la section (m³/s) de la colonne et la section de la colonne (m²).
- *H* est la hauteur d'homogénéisation du gaz entre le plateau distributeur de gaz et le lit de garnissage positionné au-dessus du plateau distributeur de gaz au sein de la colonne, qui est la hauteur séparant le plateau distributeur de gaz du lit de garnissage sus-jacent.
- *Hₜₒₜₐₗₑ* est la hauteur totale du plateau distributeur de gaz, reflétant l'encombrement du plateau.

On note qu'une valeur élevée du taux d'ouverture au passage du gaz S, comme c'est le cas pour le plateau distributeur de gaz selon l'invention exemplifié, permet une meilleure qualité de distribution

Une valeur proche de 1 du rapport *V*/*V_{SG},* comme c'est le cas pour le plateau distributeur de gaz selon l'invention exemplifié, traduit une bonne qualité de distribution du gaz, permet de réduire la hauteur d'homogénéisation des flux H entre le plateau distributeur de gaz et le lit de garnissage positionné au-dessus dudit plateau, et donc de réduire l'encombrement.

Une valeur faible de la hauteur totale du plateau distributeur de gaz Hₜₒₜₐₗₑ, comme c'est le cas pour le plateau distributeur de gaz selon l'invention exemplifié, permet un design plus compact et moins couteux. Une valeur faible de Hₜₒₜₐₗₑ permet également de réduire la hauteur totale de la colonne d'absorption.

En comparaison avec le plateau distributeur de gaz selon l'art antérieur sans recouvrement de la zone de collecte par les cheminées, le plateau distributeur de gaz et collecteur de liquide selon l'invention permet d'assurer un meilleur taux d'ouverture au passage gaz, contribuant ainsi à meilleure homogénéisation de la vitesse de gaz en aval du plateau distributeur de gaz, tout en présentant un encombrement réduit avec un gain de 27 % par rapport au distributeur selon l'art antérieur, permettant de réduire avantageusement la hauteur de la colonne.

## Revendications

1. Colonne d'échange de chaleur et/ou de matière entre un gaz et un liquide, comportant au moins un contacteur gaz/liquide (7) mettant en contact le gaz (g) et le liquide (l), et un plateau distributeur de gaz (20) disposé au fond de la colonne en amont de tout contacteur gaz/liquide (7) pour distribuer le gaz à la base dudit contacteur gaz/liquide (7)., ledit plateau distributeur de gaz (20) comportant une face supérieure et une face inférieure, une pluralité de cheminées (80) sensiblement parallélépipédiques et parallèles entre elles, en saillies sur une portion (21) de la face supérieure dudit plateau (20) pour le passage exclusif dudit gaz (g) à travers ledit plateau (20), et une zone de collecte dudit liquide (90) comportant deux déversoirs diamétralement opposés (91, 92) pour la collecte dudit liquide (l) sur ledit plateau (20), lesdits déversoirs (91, 92) étant situés en périphérie du plateau dans deux zones diamétralement opposées dudit plateau (20), et étant orthogonaux à ladite portion (21) de la face supérieure du plateau (20) supportant les cheminées (80), et ladite zone de collecte (90) étant constituée par deux volumes distincts, chaque volume étant en partie délimité par l'un des deux déversoirs et une portion basale (93) du plateau, lesdites cheminées (80) ayant sensiblement une forme de parallélépipède rectangle et s'étendant entre les déversoirs (91, 92), et lesdites cheminées (80) comportant chacune un élément de distribution du gaz (82) de même forme que la cheminée, ledit élément de distribution du gaz (82) d'au moins une desdites cheminées recouvrant en partie la zone de collecte dudit liquide (90).

2. Colonne selon la revendication 1, dans laquelle la longueur de l'élément de distribution du gaz (82) d'au moins une desdites cheminées est plus grande que la largeur (L) de la portion (21) de la face supérieure dudit plateau supportant les cheminées (80) définie comme étant la distance séparant les deux déversoirs (91, 92).

3. Colonne selon l'une quelconque des revendications précédentes, dans laquelle chaque cheminée comporte en outre un caisson de surélévation (81) sur lequel repose l'élément de distribution du gaz (82), ledit élément de distribution du gaz (82) étant ainsi surélevé par rapport à ladite portion (21) de la face supérieure dudit plateau (20) de préférence d'une hauteur (h₂) comprise entre 0 et 0,20 m.

4. Colonne selon la revendication 3, dans laquelle la longueur du caisson de surélévation (81) de chaque cheminée (80) est inférieure ou égale à la largeur (L) de la portion (21) de la face supérieure dudit plateau supportant les cheminées (80) définie comme étant la distance séparant les deux déversoirs (91, 92), et est inférieure ou égale à la longueur de l'élément de distribution du gaz (82).

5. Colonne selon l'une quelconque des revendications précédentes, dans laquelle l'élément de distribution du gaz (82) desdites cheminées (80) est surmonté par un chapeau (84) pour empêcher le passage du liquide (*l*) au travers desdites cheminées (80), ledit chapeau étant surélevé par rapport au sommet dudit élément de distribution du gaz (82) de manière à laisser un espace pour le passage du gaz (*g*).

6. Colonne selon l'une des revendications précédentes, dans laquelle au moins une desdites cheminées (80), et de préférence la totalité desdites cheminées (80), comporte un élément dispersif par rapport au gaz disposé à l'intérieur de l'élément de distribution du gaz (82) de la cheminée (80).

7. Colonne selon la revendication 6, dans laquelle ledit élément dispersif comprend une plaque perforée (85) comportant des orifices circulaires ou des fentes pour le passage du gaz.

8. Colonne selon l'une quelconque des revendications 6 et 7, dans laquelle ledit élément dispersif comprend un garnissage vrac ou structuré, de préférence réparti uniformément à l'intérieur de l'élément de distribution du gaz de ladite cheminée (80) dans le sens de sa hauteur et selon un plan orthogonal à sa hauteur.

9. Colonne selon l'une des revendications précédentes, dans laquelle ledit plateau distributeur de gaz (20) comporte entre 2 et 100 cheminées (80).

10. Utilisation d'une colonne selon l'une des revendications précédentes, pour un procédé de traitement de gaz, de captage du CO₂, de déshydratation d'un gaz ou de distillation.

## Patentansprüche

1. Kolonne zum Wärme- und/oder Materialaustausch zwischen einem Gas und einer Flüssigkeit, die mindestens einen Gas/Flüssigkeit-Kontaktor (7) aufweist, der das Gas (g) und die Flüssigkeit (l) in Kontakt bringt, und eine Gasverteilungsplatte (20), die am Boden der Kolonne vor jedem Gas/Flüssigkeit-Kontaktor (7) angeordnet ist, um das Gas an der Basis des Gas/Flüssigkeit-Kontaktors (7) zu verteilen, wobei die Gasverteilungsplatte (20) eine Oberseite und eine Unterseite, eine Vielzahl von im Wesentlichen quaderförmigen und zueinander parallelen Abzügen (80), die über einen Bereich (21) der Oberseite der Platte (20) herausragen, um ausschließlich den Durchtritt des Gases (g) durch die Platte (20) zu ermöglichen, und eine Zone zum Sammeln der Flüssigkeit (90) aufweist, die zwei diametral gegenüberliegende Überlaufrinnen (91, 92) zum Sammeln der Flüssigkeit (l) auf der Platte (20) aufweist, wobei sich die Überlaufrinnen (91, 92) am Umkreis der Platte in zwei diametral gegenüberliegenden Zonen der Platte (20) befinden und orthogonal zu dem Bereich (21) der Oberseite der Platte (20) sind, die die Abzüge (80) trägt, und die Sammelzone (90) aus zwei getrennten Volumina besteht, wobei jedes Volumen teilweise durch eine der beiden Überlaufrinnen und einen basalen Bereich (93) der Platte begrenzt ist, wobei die Abzüge (80) im Wesentlichen die Form eines rechteckigen Quaders haben und sich zwischen den Überlaufrinnen (91, 92) erstrecken und die Abzüge (80) jeweils ein Gasverteilungselement (82) mit der gleichen Form wie der Abzug aufweisen, wobei das Gasverteilungselement (82) mindestens eines der Abzüge die Zone zum Sammeln der Flüssigkeit (90) abdeckt.

2. Kolonne nach Anspruch 1, wobei die Länge des Gasverteilungselements (82) mindestens eines der Abzüge größer ist als die Breite (L) des Bereichs (21) der Oberseite der Platte, die die Abzüge (80) trägt, definiert als der Abstand zwischen den beiden Überlaufrinnen (91, 92).

3. Kolonne nach einem der vorhergehenden Ansprüche, wobei jeder Abzug darüber hinaus einen Erhöhungskasten (81) aufweist, auf dem das Gasverteilungselement (82) ruht, wobei das Gasverteilungselement (82) relativ zum Bereich (21) der Oberseite der Platte (20) vorzugsweise um eine Höhe (h₂) zwischen 0 et 0,20 m angehoben wird.

4. Kolonne nach Anspruch 3, wobei die Länge des Erhöhungskastens (81) jedes Abzugs (80) kleiner oder gleich der Breite (L) des Bereichs (21) der Oberseite der Platte ist, die die Abzüge (80) trägt, definiert als der Abstand zwischen den beiden Überlaufrinnen (91, 92), und kleiner oder gleich der Länge des Gasverteilungselements (82) ist.

5. Kolonne nach einem der vorhergehenden Ansprüche, wobei sich auf dem Gasverteilungselement (82) der Abzüge (80) ein Deckel (84) befindet, um den Durchtritt der Flüssigkeit (l) durch die Abzüge (80) zu verhindern, wobei der Deckel relativ zum höchsten Punkt des Gasverteilungselements (82) erhöht angeordnet ist, um einen Raum für den Durchtritt des Gases (g) zu lassen.

6. Kolonne nach einem der vorhergehenden Ansprüche, wobei mindestens einer der Abzüge (80) und vorzugsweise die Gesamtheit aller Abzüge (80) ein dispersives Element relativ zu dem Gas aufweist, das im Inneren des Gasverteilungselements (82) des Abzugs (80) angeordnet ist.

7. Kolonne nach Anspruch 6, wobei das dispersive Element eine Lochplatte (85) aufweist, die kreisförmige Öffnungen oder Schlitze für den Durchtritt des Gases aufweist.

8. Kolonne nach einem der Ansprüche 6 und 7, wobei das dispersive Element eine lose oder strukturierte Bestückung aufweist, die vorzugsweise gleichmäßig in dem Gasverteilungselement des Abzugs (80) in Richtung seiner Höhe und gemäß einer zu seiner Höhe orthogonalen Ebene verteilt ist.

9. Kolonne nach einem der vorhergehenden Ansprüche, wobei die Gasverteilungsplatte (20) zwischen 2 und 100 Abzüge (80) aufweist.

10. Verwenden einer Kolonne nach einem der vorhergehenden Ansprüche für ein Verfahren zur Gasbehandlung, CO2-Abscheidung, Entfeuchtung eines Gases oder Destillation.

## Claims

1. Column for exchange of heat and/or of material between a gas and a liquid, comprising at least one gas/liquid contactor (7) which brings the gas (g) and the liquid (I) into contact and a gas-distributing tray (20) positioned at the bottom of the column upstream of any gas/liquid contactor (7) in order to distribute the gas at the base of the said gas/liquid contactor (7), the said gas-distributing tray (20) comprising an upper face and a lower face, a plurality of protruding chimneys (80) which are substantially parallelepipedal and parallel to one another over a portion (21) of the upper face of the said tray (20) for the exclusive passage of the said gas (g) through the said tray (20), and a zone for collecting the said liquid (90) comprising two diametrically opposite weirs (91, 92) for collecting the said liquid (I) on the said tray (20), the said weirs (91, 92) being located at the periphery of the tray in two diametrically opposite zones of the said tray (20) and being orthogonal to the said portion (21) of the upper face of the tray (20) supporting the chimneys (80), and the said collecting zone (90) being composed of two distinct volumes, each volume being partially delimited by one of the two weirs and a basal portion (93) of the tray, the said chimneys (80) having substantially a right-angled parallelepiped shape and extending between the weirs (91, 92), and the said chimneys (80) each comprising an element for distribution of the gas (82) of the same shape as the chimney, the said element for distribution of the gas (82) of at least one of the said chimneys partially overlapping the zone for collecting the said liquid (90).

2. Column according to Claim 1, in which the length of the element for distribution of the gas (82) of at least one of the said chimneys is greater than the width (L) of the portion (21) of the upper face of the said tray supporting the chimneys (80), which is defined as being the distance separating the two weirs (91, 92).

3. Column according to either one of the preceding claims, in which each chimney additionally comprises a raising chamber (81) on which the element for distribution of the gas (82) rests, the said element for distribution of the gas (82) thus being raised with respect to the said portion (21) of the upper face of the said tray (20), preferably by a height (h₂) of between 0 and 0.20 m.

4. Column according to Claim 3, in which the length of the raising chamber (81) of each chimney (80) is less than or equal to the width (L) of the portion (21) of the upper face of the said tray supporting the chimneys (80), which is defined as being the distance separating the two weirs (91, 92), and is less than or equal to the length of the element for distribution of the gas (82).

5. Column according to any one of the preceding claims, in which the element for distribution of the gas (82) of the said chimneys (80) is surmounted by a cap (84) for preventing the passage of the liquid (*l*) through the said chimneys (80), the said cap being raised with respect to the top of the said element for distribution of the gas (82) so as to leave a space for the passage of the gas (*g*).

6. Column according to one of the preceding claims, in which at least one of the said chimneys (80), and preferably all of the said chimneys (80), comprises an element which is dispersive with respect to the gas positioned inside the element for distribution of the gas (82) of the chimney (80).

7. Column according to Claim 6, in which the said dispersive element comprises a perforated plate (85) comprising circular orifices or slits for the passage of the gas.

8. Column according to either one of Claims 6 and 7, in which the said dispersive element comprises a random or structured packing, preferably uniformly disseminated inside the element for distribution of the gas of the said chimney (80) in the direction of its height and along a plane orthogonal to its height.

9. Column according to one of the preceding claims, in which the said gas-distributing tray (20) comprises between 2 and 100 chimneys (80).

10. Use of a column according to one of the preceding claims, for a process for the treatment of gas, for capturing CO₂, for the dehydration of a gas or for distillation.
